## Europäisches Patentamt
## European Patent Office
## Office européen des brevets

(19)

(11) **EP 0 467 202 B1**

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(51) Int Cl.$^6$: **G01V 3/08**

(21) Anmeldenummer: **91111436.1**

(22) Anmeldetag: **09.07.1991**

(54) **Vorrichtung zur Prüfung von mit magnetischen Eigenschaften ausgestatteten Messobjekten**

Arrangement for testing of objects with magnetic properties

Disposition pour tester des objets ayant des propriétés magnétiques

(84) Benannte Vertragsstaaten:
**AT BE CH DE ES FR GB IT LI LU NL SE**

(30) Priorität: **17.07.1990 DE 4022739**

(43) Veröffentlichungstag der Anmeldung:
**22.01.1992 Patentblatt 1992/04**

(73) Patentinhaber: **GAO Gesellschaft für Automation und Organisation mbH**
**81307 München (DE)**

(72) Erfinder: **Stein, Dieter**
**W-8150 Holzkirchen (DE)**

(74) Vertreter: **Klunker . Schmitt-Nilson . Hirsch**
**Winzererstrasse 106**
**80797 München (DE)**

(56) Entgegenhaltungen:
EP-A- 0 295 229          AT-A- 348 901
DE-A- 1 474 466          DE-A- 2 631 404
US-A- 3 972 156

- PATENT ABSTRACTS OF JAPAN vol. 9, no. 37 (P-335) 16. Februar 1985 & JP-A-59 178 383
- SENSORS, Band 5, Magnetic Sensors, VCH-Verlagsges. Weinheim (DE), 1989, Seiten 257-261; 307-308

## Beschreibung

Die Erfindung betrifft eine Vorrichtung zur Prüfung von mit magnetischen Eigenschaften ausgestatteten flachen Meßobjekten, beispielsweise von Dokumenten, mit mindestens einem einen magnetischen Detektor aufweisenden magnetischen Kreis mit Luftspalt, der sich in einem statischen magnetischen Feld befindet.

Eine Anordnung der obengenannten Art zur Prüfung von Banknoten mit magnetischen Eigenschaften, beispielsweise magnetischen Partikeln, ist aus der EP-A2 0 295 229 bekannt. Die Meßvorrichtung besteht aus einem Permanentmagneten und einem magnetischen Kreis, der sich oberhalb des Permanentmagneten befindet. Der magnetische Kreis weist zwei gleichgeformte und aus dem gleichen Material bestehende Schenkel mit einem Luftspalt zwischen den Schenkeln und einer um das Joch des magnetischen Kreises gewickelten Spule auf. Der Permanentmagnet ist relativ zum magnetischen Kreis derart positioniert, daß dessen Feld sich im Luftspalt in einer zur Transportrichtung senkrecht stehenden Ebene erstreckt. Die Banknote wird derart am Luftspalt vorbeibewegt, daß das statische Magnetfeld auf die Magnetpartikel einwirkt. Die am Luftspalt vorbeibewegten magnetisierten Partikel induzieren im magnetischen Kreis eine Flußänderung, die ein entsprechendes Signal an der Spule erzeugt.

Das Wesentliche der bekannten Vorrichtung besteht darin, daß das statische Permanentfeld derart ausgerichtet ist, daß dessen Feldlinien nicht in den magnetischen Kreis eingekoppelt werden, wodurch eine Sättigungsmagnetisierung dieses Kreises vermieden werden soll.

Die gewählte Anordnung von magnetischem Kreis und Permanentmagnet hat jedoch den Nachteil, daß nur ein geringer Teil des statischen Gesamtmagnetfeldes auf die Magnetpartikel einwirken kann. Damit ist der Grad der Magnetisierung dieser Partikel entsprechend gering, wodurch entsprechend geringe Signale in der Spule induziert werden.

Die DE-OS 14 74 466 beschreibt eine Vorrichtung zur Detektion ferromagnetischer Bereiche auf einem Informationsträger. Die Vorrichtung besteht aus mindestens einem magnetischen Dipol, dessen magnetische Achse senkrecht zur Abfrageebene steht. In dem magnetischen Kreis, der von dem magnetischen Dipol gebildet wird, befindet sich eine Feldplatte, mittels derer Änderungen des magnetischen Flusses im magnetischen Kreis gemessen werden. Der magnetische Dipol ist so angeordnet, daß die ferromagnetischen Bereiche des Informationsträgers beim Transport des Informationsträgers entlang der Vorrichtung einen Rückschluß im magnetischen Kreis des Dipols bilden, so daß eine Änderung des magnetischen Flusses im magnetischen Kreis entsteht.

In einer bipolaren Ausführung der Vorrichtung wird die Feldplatte an einem Mittelschenkel angebracht. Die magnetischen Dipole sind bezüglich des Mittelschenkels so angeordnet, daß sich die magnetischen Flüsse im Mittelschenkel aufheben. Durch die ferromagnetischen Bereiche des Informationsträgers wird dieses Gleichgewicht gestört, so daß eine Änderung des magnetischen Flusses im Mittelschenkel auftritt, der dann von der Feldplatte detektiert wird.

Nachteil der Vorrichtung ist es, daß lediglich ferromagnetische Bereiche mit großer Remanenz ausreichend zuverlässig detektiert werden können.

Die Aufgabe der Erfindung besteht darin, eine Vorrichtung zur Prüfung magnetischer Eigenschaften von flachen Meßobjekten vorzuschlagen, die insbesondere auch bei der Messung magnetischer Partikel geringer Remanenz ausreichend zuverlässige Signale liefert.

Die Aufgabe wird erfindungsgemäß durch die im kennzeichnenden Teil des Hauptanspruchs angegebenen Merkmale gelöst.

Bei der erfindungsgemäßen Vorrichtung besteht der magnetische Kreis aus einem weich- und einem permanentmagnetischen Material, wobei das statische Permanentfeld den, beispielsweise eine Spule aufweisenden, weichmagnetischen Teil durchsetzt. Die Stärke des statischen Permanentfeldes wird so gewählt, daß das weichmagnetische Material im Arbeitspunkt eine hohe Permeabilität aufweist. Durch die Auswahl eines geeigneten weichmagnetischen Materials und die Zahl der Windungen der Spule kann das System in seiner Empfindlichkeit eingestellt werden.

In einer ersten Ausführungsform besteht die erfindungsgemäße Vorrichtung aus einem magnetischen Kreis, bei dem sich auf einem weichmagnetischen Material eine Spule befindet. Das weichmagnetische Material endet auf einer Seite in einem Polschuh und ist auf der anderen Seite mit einem permanentmagnetischen Material, dem Permanentmagneten, verbunden. Wesentlich ist, daß sich der Luftspalt und damit das Streufeld der Anordnung zwischen dem Polschuh einerseits und dem magnetischen Pol des Permanentmagneten andererseits ausbildet. Polschuh und magnetischer Pol des Permanentmagneten werden möglichst nahe an den Transportweg des Meßguts herangeführt. So wird durch die magnetischen Partikel im Meßgut die Flußdichte im Streufeldbereich und damit die im magnetischen Kreis erheblich erhöht. Eine entsprechende Spannungsänderung kann an den Enden der Spule abgegriffen werden.

Bei der Prüfung eines mit Magnetpartikeln dotierten Druckbildes einer Banknote wird das Streufeld vorzugsweise so ausgerichtet, daß es parallel zu einer Kante des Druckbildes verläuft, da so der zeitliche Gradient der Flußdichte besonders groß ist.

Luftspalt und damit Streufeld können aber auch parallel zur Transportrichtung des Dokuments ausgerichtet sein, wobei aber der Luftspalt möglichst eng gewählt werden sollte, um auch bei dieser Anordnung einen entsprechend hohen zeitlichen Gradienten in der Flußdichte zu erzielen.

Sowohl bei der erst- als auch bei der zweitgenannten Ausrichtung des Streufeldes können zwei magnetische Kreise vorgesehen werden, wobei die Luftspalte zwischen den gleichen Polen zweier Permanentmagnete und einem Polschuh des weichmagnetischen Materials oder aber zwischen zwei Polschuhen des weichmagnetischen Materials und dem Pol eines Permanentmagneten gebildet werden.

Die erfindungsgemäße Vorrichtung hat vor allem den Vorteil, daß gerade auch magnetische Partikel geringer Remanenz, deren charakteristische Eigenschaft ihre Permeabilität ist, mit hoher Zuverlässigkeit detektiert werden können.

Durch ein zweites System, das beispielsweise auch über weichmagnetisches Material mit dem ersten System verbunden ist und dessen Spulen elektrisch in Serie geschaltet sind, können magnetische Störfelder, die auf die Gesamtanordnung einwirken, eliminiert werden, da diese Felder beide Systeme in der gleichen Richtung passieren und somit zu Null kompensiert werden.

Weitere Vorteile und Weiterbildungen der Erfindung ergeben sich aus den abhängigen Ansprüchen sowie aus der nachfolgenden Beschreibung der Ausführungsbeispiele anhand der Figuren.

Darin zeigen:

Fig. 1 eine induktive Meßvorrichtung, angeordnet im Bereich der Transportbahn eines Meßobjekts,

Fig. 2, 3, 4 die Meßvorrichtung nach Fig. 1 in der Vorderansicht und in zwei Seitenansichten mit und ohne Meßobjekt,

Fig. 5 die Hysteresekurve eines weichmagnetischen Materials,

Fig. 6 zwei in Transportrichtung des Meßguts hintereinander angeordnete Meßvorrichtungen,

Fig. 7 einen Spannungsverlauf an der Meßspule, wenn ein Meßobjekt die Vorrichtung nach Fig. 6 passiert,

Fig. 8 eine Schnittdarstellung der in Fig. 9 gezeigten Vorrichtung und

Fig. 9 eine Mehrkanalmeßvorrichtung in Draufsicht.

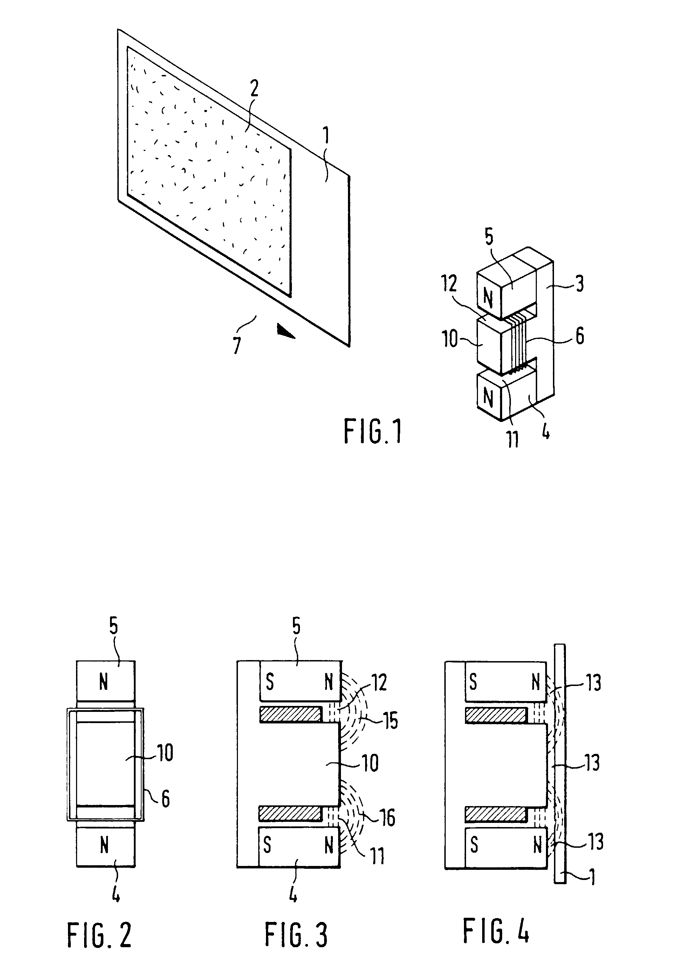

Fig. 1 zeigt eine erste Ausführungsform der erfindungsgemäßen Vorrichtung in perspektivischer Darstellung. Das Meßobjekt 1, beispielsweise eine Banknote, weist magnetische Partikel in der Farbe des Druckbildes 2 auf. Die magnetischen Partikel sind, wie in der Fig. 1 angedeutet, gleichmäßig über das gesamte Druckbild verteilt. Das Meßobjekt 1 wird quer zur senkrecht angeordneten Vorrichtung vorbeibewegt.

Die Meßvorrichtung besteht aus einem weichmagnetischen Teil 3 mit einer Spule 6 und zwei Permanentmagneten 4 und 5. Die Permanentmagnete sind mit jeweils dem gleichen Pol mit dem weichmagnetischen Material 3 verbunden. Das zwischen den Permanentmagneten 4, 5 angeordnete weichmagnetische Material 3 weist einen auf die Oberfläche der Banknote gerichteten Polschuh 10 auf. Die freien Pole der Permanentmagneten (Nordpole) enden ebenfalls in der Ebene des Polschuhs 10. Die gesamte Anordnung, bestehend aus Permanentmagnet - Polschuh - Permanentmagnet, ist so dimensioniert, daß sie etwa die Breite des Meßobjekts 1 abdeckt. Durch die gewählte Anordnung ergeben sich zwei magnetische Kreise jeweils zwischen dem Polschuh 10 und dem Permanentmagneten 4 und 5. Zwischen den freien Enden der Anordnung sind zwei Luftspalte 11, 12 vorgesehen, durch die magnetische Streufelder erzeugt werden, welche durch die magnetischen Partikel im Druckbild 2 der Banknote 1 beeinflußbar sind.

Die magnetischen Kreise können auch zwischen zwei Polschuhen des weichmagnetischen Materials und einem zwischen diesen Polschuhen angeordneten Permanentmagneten erzeugt werden, so daß sich die Anordnung Polschuh - Permanentmagnet - Polschuh ergibt.

Auch eine Meßvorrichtung bestehend aus einem Permanentmagneten und einem Polschuh löst im Prinzip die der Erfindung zugrundeliegende Aufgabe, wobei sich dann nur ein magnetischer Kreis mit zur Banknote hinweisendem Luftspalt und dem entsprechenden Streufeld ergibt. Wenn mit einer solchen Anordnung auch etwa die Breite des Meßobjekts abgedeckt werden soll, ist wegen des größeren Luftspaltes der Permanentmagnet entsprechend stärker auszulegen, um im weichmagnetischen Material die für einen Arbeitspunkt hoher Permeabilität notwendige Flußdichte zu erzielen.

Die Beeinflussung des Streufeldes durch die Magnetpartikel der Banknote soll anhand der Fig. 2, 3 und 4 gezeigt werden. Die Fig. 2 und 3 zeigen die Vorrichtung aus Fig. 1 in der Vorderansicht und in einer Seitenansicht. Die Fig. 3 zeigt den prinzipiellen Feldlinienverlauf der Anordnung ohne Meßgut 1. Die in und über den Luftspalten 11 und 12 entstehenden Streufelder 15 und 16 sind vergleichbar dem Feld eines Hufeisenmagneten. Ein Meßgut mit hoher Permeabilität, ausreichend großer Dicke und genügend kleinem Abstand, verändert den Feldlinienverlauf, wie er in der Fig. 4 gezeigt ist. Die Flußdichte über dem Polschuh bzw. den Polen der Permanentmagneten hat sich erheblich erhöht, da das Meßgut 1 in Serie mit den kleineren Luftspalten 13 zwischen ihm und dem Polschuh bzw. den Polen der Magneten für die weichmagnetischen Kreise einen geringeren magnetischen Widerstand darstellt als der größere Luftspalt 11, 12 zwischen dem Polschuh 10 und den Polen der Permanentmagneten 4, 5. Die Luftspalte zwischen den Polschuhen und dem Magneten werden daher günstigerweise so gewählt, daß sie größer sind, vorzugsweise mindestens zweimal größer, als der Abstand zum Meßgut. Wie die Darstellungen in den Fig. 3 und 4 zeigen, bewirken die in das Streufeld der Anordnung gebrachten Magnetpartikel eine Flußdichten-Differenz, welche als Induktionsspannung in der Meßspule zu detektieren ist.

Ein Meßgut, das aufgrund geringerer Permeabilität, geringerer Dicke und größerem Abstand zur Meßvorrichtung keine so vollständige magnetische Abschirmung der Felder erreicht, erzeugt einen Feldlinienverlauf, der eine Mischung aus den in den Fig. 3 und 4 gezeigten Grenzzuständen darstellt. Die Induktionsspannung fällt in diesem Fall entsprechend kleiner aus.

Wie schon erwähnt, wird die Stärke des statischen Permanentfeldes im magnetischen Kreis derart gewählt, daß das weichmagnetische Material im magnetischen Arbeitspunkt eine möglichst hohe Permeabilität aufweist. Erreichbare Flußdichten bei weichmagnetischen Materialien liegen bei 0,1 bis 1 Tesla.

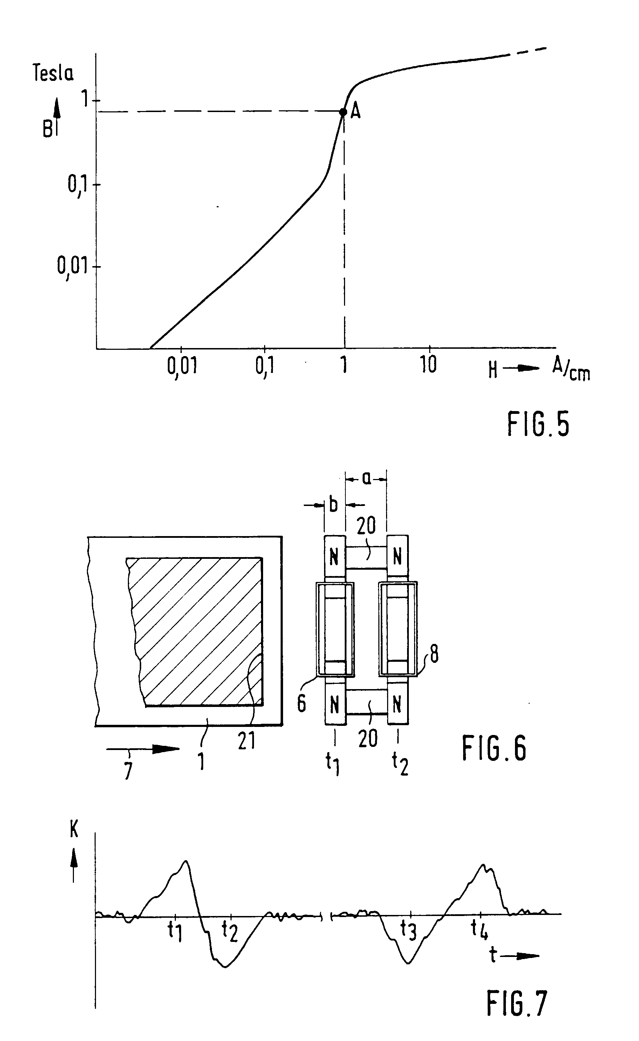

Die Fig. 5 zeigt die Hysteresekurve eines weichmagnetischen Materials in logarithmischer Darstellung. Bei diesem Material erreicht die Permeabilität bei einem Arbeitspunkt von etwa 0,6 Tesla Werte von $\mu > 10.000 \cdot \mu o$. In diesem Arbeitspunkt, in dem die Hysteresekurve einen sehr steilen Verlauf hat, haben Änderungen der Feldstärke entsprechend starke Änderungen der Induktionsamplitude zur Folge.

Die in der Spule des magnetischen Kreises induzierte Spannung gehorcht der Gesetzmäßigkeit.

$$U = - \mu o \cdot \mu r \cdot \frac{N^2 \cdot A}{1} \cdot \frac{dB}{dt}$$

wobei gilt:

$$\mu r = \frac{dB}{dH} / \text{Arbeitspunkt.}$$

Durch die Auswahl eines geeigneten weichmagnetischen Materials für die Polschuhe und die Zahl der Windungen (N) kann das System in seiner Empfindlichkeit eingestellt werden. Werden die Permanentmagnete, wie in den Fig. 1 bis 4 gezeigt, senkrecht zur Transportrichtung ober- und unterhalb des Polschuhs angeordnet, ist der zeitliche Gradient der Flußdichte bei einer über das Meßsystem hinwegbewegten Kante des Druckbildes besonders groß. Aufgrund der geschilderten Maßnahmen sind mit der erfindungsgemäßen Vorrichtung deshalb gerade auch Magnetpartikel geringer Remanenz mit hoher Zuverlässigkeit detektierbar.

Die Fig. 6 zeigt in einem weiteren Ausführungsbeispiel der Erfindung zwei Systeme, die in Transportrichtung des Meßobjekts (Pfeil 7) nebeneinander angeordnet sind. Die Systeme sind von dem in der Fig. 1 bereits gezeigten Aufbau. Die Spule 8 des in Transportrichtung gesehenen zweiten Systems ist in Serie, aber mit entgegengesetzter Polarität mit der Spule 6 des ersten Systems verbunden. Auf diese Weise werden Störsignale, die auf beide Systeme gleichzeitig einwirken, kompensiert.

Die Systeme können über weichmagnetisches Material 20 miteinander verbunden sein. Entsprechend der Dicke derartiger Verbindungsstücke kann der Abstand a zwischen den Systemen eingestellt werden. Der Abstand a und die Breite der Polschuhe b bestimmen letztlich das Auflösungsvermögen des Systems.

Die Fig. 7 zeigt einen stark vereinfachten Signalverlauf, der sich ergibt, wenn ein Meßobjekt das in Fig. 6 gezeigte System passiert. Das Meßobjekt sei in diesem Ausführungsbeispiel eine Banknote 1, deren Druckbild nahezu vollflächig mit magnetischen Partikeln versehen ist, so daß die einlaufende Kante 21 des Druckbildes nacheinander zu den Zeitpunkten tl und t2 die gezeigten Signalpegel unterschiedlicher Polarität erzeugt. In gleicher Weise erzeugt die auslaufende Kante des Druckbildes die gezeigten Signalpegel zu den Zeitpunkten t3 und t4.

Wie erwähnt, bestimmen die Größen a und b die örtliche Auflösung des Systems. Bei einer Polschuhbreite von etwa b = 1,5 mm und einem Abstand der Systeme von etwa a = 3 mm kann eine Druckbildkante, wie in Fig. 7 gezeigt, mit hoher Zuverlässigkeit detektiert werden. Zur Erkennung von Drucklinien oder Mustern, die mit Magnetpartikeln dotiert sind, sind die genannten Größen entsprechend anzupassen.

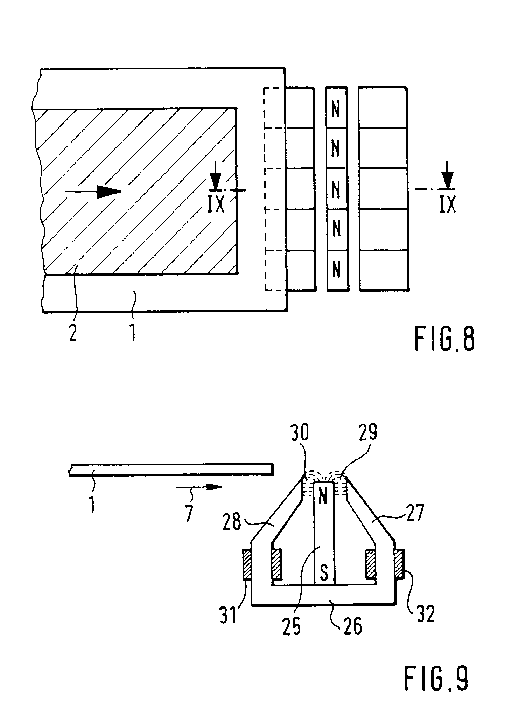

Die Fig. 8 und 9 zeigen eine weitere Ausführungsform der Erfindung, bei der in Richtung der relativen Bewegung zwischen Meßsystem und Meßgut Polschuh, Pol des Permanentmagneten und zweiter Polschuh hintereinander angeordnet sind. Bei der in der Fig. 9 im Schnitt gezeigten Vorrichtung ist der Permanentmagnet 25 zwischen zwei Polschuhen eines hufeisenförmigen weichmagnetischen Materials 26 angeordnet. Die beiden weichmagnetischen Polschuhe sind als gleichgeformte Schenkel 27, 28 ausgebildet, deren Enden mit dem freien Pol des Permanentmagneten jeweils einen Luftspalt 29, 30 bilden. Auf beiden Schenkeln sind Spulen 31, 32 vorgesehen. Die Ausbildung der Streufelder und deren Wechselwirkung mit dem Meßgut ist ähnlich den schon vorher beschriebenen Systemen.

Ein Vorteil der gezeigten Anordnung besteht vor allem darin, daß mit der Anordnung der Elemente auf einfache Weise ein Mehrkanalsystem aufgebaut werden kann, wobei die Einzelsysteme senkrecht zur Transportrichtung des Meßguts nebeneinander angeordnet sind. Die Fig. 8 zeigt eine 5-Spuranordnung, mit der auch detaillierte Messungen, beispielsweise im Druckbild, möglich sind. Gegebenenfalls sind die einzelnen Systeme durch geeignete Maßnahmen magnetisch zu entkoppeln, um ein Übersprechen zu minimieren.

**Patentansprüche**

1.  Vorrichtung zur Prüfung von mit magnetischen Partikeln ausgerüsteten relativ zur Vorrichtung bewegten Dokumenten mit mindestens einem einen magnetischen Detektor (6, 31, 32) aufweisenden magnetischen Kreis mit Luftspalt (11, 12, 29, 30), wobei

- der magnetische Kreis zu einem Teil aus magnetisch leitendem (3, 26) und zu einem anderen Teil aus permanentmagnetischem Material (4, 5, 25) besteht,

- das magnetisch leitende und permanentmagnetische Material im magnetischen Kreis derart angeordnet ist, daß

- der Luftspalt zwischen einem Polschuh (10) des magnetisch leitenden Materials und einem Pol des permanentmagnetischen Materials gebildet wird und

- ein statisches magnetisches Feld entsteht, das beide Teile durchsetzt und im Luftspalt ein Streufeld (15, 16) erzeugt, welches während der Prüfung das Meßobjekt durchdringt,

dadurch **gekennzeichnet**,

- daß das magnetisch leitende Material weichmagnetisch ist und

- daß der Detektor (6) am weichmagnetischen Material dort angeordnet ist, wo eine durch das permanentmagnetische Material erzeugte, vorgegebene statische magnetische Feldstärke (H) vorliegt, die einen optimalen Arbeitspunkt (A) für das weichmagnetische Material darstellt, bei dem eine geringe Änderung der magnetischen Feldstärke (H) durch die magnetischen Partikel (2) im Streufeld mit einer starken Änderung der magnetischen Induktion (B) einhergeht.

2. Vorrichtung nach Anspruch 1, dadurch **gekennzeichnet**, daß der Detektor eine um den weichmagnetischen Teil des magnetischen Kreises gewikkelte Spule (6, 31, 32) ist.

3. Vorrichtung nach Anspruch 1 oder 2, dadurch **gekennzeichnet**, daß der Luftspalt (11, 12, 29, 30) etwa doppelt so breit ist wie der Abstand der Vorrichtung zum Dokument.

4. Vorrichtung nach Anspruch 1, dadurch **gekennzeichnet**, daß mehrere magnetische Kreise vorhanden sind, wobei Luftspalte zwischen jeweils einem Polschuh und dem Pol eines Permanentmagneten gebildet sind.

5. Vorrichtung nach Anspruch 4, dadurch **gekennzeichnet**, daß zwei magnetische Kreise vorhanden sind, wobei die Polschuhe und Pole des Permanentmagneten zur gleichen Seite des Dokuments weisen.

6. Vorrichtung nach Anspruch 5, dadurch **gekennzeichnet**, daß die Streufelder der magnetischen Kreise senkrecht zur Transportrichtung des Dokuments ausgerichtet sind.

7. Vorrichtung nach Anspruch 6, dadurch **gekennzeichnet**, daß senkrecht zur Transportrichtung ober- und unterhalb des Polschuhs je ein Permanentmagnet mit dem weichmagnetischen Material verbunden ist, wobei die gleichnamigen Pole der Permanentmagneten zum Dokument weisen und die Ausdehnung der Streufelder in etwa der Breite des Dokuments entspricht.

8. Vorrichtung nach Anspruch 4, dadurch **gekennzeichnet**, daß die Elemente der Vorrichtung in Transportrichtung hintereinander angeordnet sind.

9. Meßsystem, dadurch **gekennzeichnet**, daß mehrere Vorrichtungen gemäß einem der Ansprüche 1 - 8 zur Bildung einer Mehrkanalanordnung senkrecht zur Transportrichtung nebeneinander angeordnet sind.

10. Meßsystem, dadurch **gekennzeichnet**, daß mindestens zwei Vorrichtungen gemäß einem der Ansprüche 1 - 8 vorhanden sind, deren Spulen elektrisch in Serie geschaltet sind, so daß die Signale eines magnetischen Flusses, der beide Vorrichtungen in der gleichen Richtung durchsetzt, zu Null kompensiert werden.

11. Meßsystem nach Anspruch 10, dadurch **gekennzeichnet**, daß die Vorrichtungen über weichmagnetisches Material miteinander verbunden sind.

12. Meßsystem nach Anspruch 10, dadurch **gekennzeichnet**, daß die Breite der Polschuhe und der Abstand der beiden Vorrichtungen abhängig von der gewünschten Ortsauflösung gewählt wird.

13. Vorrichtung nach einem der Ansprüche 1 - 8, dadurch **gekennzeichnet**, daß das weichmagnetische Material eine Sättigungsmagnetisierung von mindestens 0,6 Tesla hat.

14. Vorrichtung nach einem der Ansprüche 1 - 8 oder 13, dadurch **gekennzeichnet**, daß das weichmagnetische Material im magnetischen Arbeitspunkt die Permeabilität ($\mu = dB/dH$) Werte mit $\mu > 10.000 \cdot \mu_0$ aufweist.

15. Vorrichtung nach einem der Ansprüche 1 - 8 oder 13 - 14, dadurch **gekennzeichnet**, daß das verwendete permanentmagnetische Material aus hochkoerzitivem Material, wie z. B. SmCo oder Nd FeB besteht.

16. Vorrichtung nach einem der Ansprüche 1 - 8 oder 13 - 15, dadurch **gekennzeichnet**, daß sie mit einem zur Meßseite hin offenen abschirmenden Gehäuse aus magnetisch hochpermeablen Material versehen ist.

**Claims**

1. An apparatus for testing documents equipped with magnetic particles and moving relative to the apparatus having at least one magnetic circuit with an air gap (11, 12, 29, 30) and a magnetic detector (6, 31, 32),

   the magnetic circuit consisting in one part of magnetically conductive material (3, 26) and in another part of permanent-magnetic material (4, 5, 25),
   the magnetically conductive and permanent-magnetic material being disposed in the magnetic circuit in such a way that
   the air gap is formed between a pole shoe (10) of the magnetically conductive material and a pole of the permanent-magnetic material, and a static magnetic field arises penetrating both parts and producing in the air gap a stray field (15, 16) which penetrates the test object during testing,

   characterized in that

   the magnetically conductive material is soft-magnetic, and
   the detector (6) is disposed on the soft-magnetic material at the place where a predetermined static magnetic field strength (H) produced by the permanent-magnetic material exists, which constitutes an optimal operating point (A) for the soft-magnetic material at which a slight change in magnetic field strength (H) through the magnetic particles (2) in the stray field involves a strong change in magnetic induction (B).

2. The apparatus of claim 1, characterized in that the detector is a coil (6, 31, 32) wound about the soft-magnetic part of the magnetic circuit.

3. The apparatus of claim 1 or 2, characterized in that the air gap (11, 12, 29, 30) is about twice as wide as the distance between the apparatus and the document.

4. The apparatus of claim 1, characterized in that a plurality of magnetic circuits are provided, the air gaps being formed between a pole shoe and the pole of a permanent magnet in each case.

5. The apparatus of claim 4, characterized in that two magnetic circuits are provided, the pole shoes and poles of the permanent magnet pointing to the same side of the document.

6. The apparatus of claim 5, characterized in that the stray fields of the magnetic circuits are oriented perpendicular to the direction of transport of the document.

7. The apparatus of claim 6, characterized in that a permanent magnet is connected with the soft-magnetic material above and below each pole shoe perpendicular to the direction of transport, the like poles of the permanent magnets pointing to the document and the extent of the stray fields corresponding approximately to the width of the document.

8. The apparatus of claim 4, characterized in that the elements of the apparatus are disposed one behind the other in the direction of transport.

9. A measuring system, characterized in that a plurality of apparatuses according to any of claims l to 8 are disposed side by side perpendicular to the direction of transport so as to form a multichannel assembly.

10. A measuring system, characterized in that at least two apparatuses according to any of claims 1 to 8 are present whose coils are connected electrically in series, so that the signals of a magnetic flux penetrating both apparatuses in the same direction are compensated to zero.

11. The measuring system of claim 10, characterized in that the apparatuses are interconnected via soft-magnetic material.

12. The measuring system of claim 10, characterized in that the width of the pole shoes and the distance between the two apparatuses is selected in accordance with the desired spatial resolution.

13. The apparatus of any of claims 1 to 8, characterized in that the soft-magnetic material has a saturation magnetization of at least 0.6 teslas.

14. The apparatus of any of claims 1 to 8 or 13, characterized in that the soft-magnetic material at the magnetic operating point has permeability ($\mu = dB/$

dH) values of $\mu > 10,000 \cdot \mu o$.

**15.** The apparatus of any of claims 1 to 8 or 13 to 14, characterized in that the permanent-magnetic material used consists of highly coercive material, such as SmCo or Nd FeB.

**16.** The apparatus of any of claims 1 to 8 or 13 to 15, characterized in that it is provided with a shielding housing open on the measuring side, made of magnetically highly permeable material.

## Revendications

**1.** Dispositif de contrôle de documents pourvus de particules magnétiques et déplacés par rapport au dispositif, comprenant au moins un circuit magnétique à entrefer (11, 12, 29, 30) comportant un détecteur magnétique (6, 31, 32),

- le circuit magnétique étant constitué pour une part d'un matériau (3, 26) magnétiquement conducteur et pour une autre part d'un matériau (4, 5, 25) magnétique permanent,
- le matériau magnétiquement conducteur et le matériau magnétique permanent étant disposés dans le circuit magnétique de telle sorte que

  - l'entrefer est formé entre une corne polaire (10) du matériau magnétiquement conducteur et un pôle du matériau magnétique permanent, et
  - qu'il apparaît un champ magnétique statique qui traverse les deux éléments et produit dans l'entrefer un champ de dispersion (15, 16) qui traverse l'objet mesuré pendant le contrôle,

caractérisé en ce

- que le matériau magnétiquement conducteur est un matériau magnétique doux, et
- que le détecteur (6) est disposé sur le matériau magnétique doux là où il existe une intensité (H) de champ magnétique statique prédéterminée produite par le matériau magnétique permanent, laquelle intensité constitue un point de travail (A) optimal pour le matériau magnétique doux dans lequel une faible variation de l'intensité (H) de champ magnétique due aux particules (2) magnétiques dans le champ de dispersion s'accompagne d'une forte modification de l'induction (B) magnétique.

**2.** Dispositif selon la revendication 1, caractérisé en ce que le détecteur est une bobine (6, 31, 32) enroulée autour de l'élément magnétique doux du circuit magnétique.

**3.** Dispositif selon la revendication 1 ou 2, caractérisé en ce que l'entrefer (11, 12, 29, 30) a une largeur qui représente environ le double de l'écartement du dispositif par rapport au document.

**4.** Dispositif selon la revendication 1, caractérisé en ce qu'il existe plusieurs circuits magnétiques, des entrefers étant formés chaque fois entre une corne polaire et le pôle d'un aimant permanent.

**5.** Dispositif selon la revendication 4, caractérisé en ce qu'il existe deux circuits magnétiques, les cornes polaires et les pôles de l'aimant permanent étant dirigés vers le même côté du document.

**6.** Dispositif selon la revendication 5, caractérisé en ce que les champs de dispersion des circuits magnétiques sont orientés perpendiculairement à la direction de transport du document.

**7.** Dispositif selon la revendication 6, caractérisé en ce qu'un aimant permanent est relié au matériau magnétique doux, perpendiculairement à la direction de transport, respectivement au-dessus et au-dessous de la corne polaire, les pôles de même nom des aimants permanents étant dirigés vers le document et l'étendue des champs de dispersion correspondant sensiblement à la largeur du document.

**8.** Dispositif selon la revendication 4, caractérisé en ce que les éléments du dispositif sont disposés les uns derrière les autres dans la direction de transport.

**9.** Système de mesure, caractérisé en ce que plusieurs dispositifs selon l'une des revendications 1 à 8 sont disposés côte à côte perpendiculairement à la direction de transport pour former un agencement à canaux multiples.

**10.** Système de mesure, caractérisé en ce qu'il existe au moins deux dispositifs selon l'une des revendications 1 à 8, dont les bobines sont montées en série d'un point de vue électrique de sorte que les signaux d'un flux magnétique, qui traverse les deux dispositifs dans le même sens, sont compensés à zéro.

**11.** Système de mesure selon la revendication 10, caractérisé en ce que les dispositifs sont reliés entre eux par un matériau magnétique doux.

**12.** Système de mesure selon la revendication 10, caractérisé en ce que la largeur des cornes polaires et l'écartement des deux dispositifs sont choisis en fonction de la résolution locale souhaitée.

13. Dispositif selon l'une des revendications 1 à 8, caractérisé en ce que le matériau magnétique doux a une saturation magnétique d'au moins 0,6 tesla.

14. Dispositif selon l'une des revendications 1 à 8 ou 13, caractérisé en ce que la perméabilité ($\mu = dB/dH$) du matériau magnétique doux au point de travail magnétique a des valeurs de $\mu > 10\ 000 \cdot \mu o$.

15. Dispositif selon l'une des revendications 1 à 8 ou 13 à 14, caractérisé en ce que le matériau magnétique permanent utilisé est constitué d'un matériau très coercitif, comme par exemple du SmCo ou du Nd FeB.

16. Dispositif selon l'une des revendications 1 à 8 ou 13 à 15, caractérisé en ce qu'il est équipé d'un boîtier de blindage en un matériau de grande perméabilité magnétique, ouvert vers le côté de mesure.

FIG.1

FIG. 2     FIG. 3     FIG. 4

FIG.5

FIG.6

FIG.7

FIG.8

FIG.9